# EUROPEAN PATENT SPECIFICATION

(11) **EP 1 434 687 B1**
(45) Date of publication and mention of the grant of the patent: **15.03.2006**
(21) Application number: 02767495.1
(22) Date of filing: 23.09.2002
(51) Int. Cl.: B31F 1/07

(54) **DEVICE AND METHOD FOR APPLYING A SPOT EMBOSSING PATTERN TO A WEB OF MULTI-PLY TISSUE PAPER**
VERFAHREN UND VORRICHTUNG ZUM PRÄGEN EINER MEHRLAGIGEN TISSUE-PAPIERBAHN
DISPOSITIF ET PROCEDE D'APPLICATION D'UN MOTIF GAUFRE LOCALISE SUR UNE BANDE DE PAPIER MOUSSELINE MULTICOUCHES

(30) Priority: 02.10.2001 GB 0123632
(43) Date of publication of application: 07.07.2004
(73) Proprietor: SCA Hygiene Products GmbH, 68305 Mannheim (DE)
(72) Inventor: HEIN, Ferdinand, 68305 Mannheim (DE); HARLACHER, Harald, 68307 Mannheim (DE); LEONHARDT, Joachim, 68199 Mannheim (DE)
(74) Representative: HOFFMANN EITLE
(86) International application number: PCT/EP2002/010655
(87) International publication number: WO 2003/031170

(56) References cited:
- EP-A- 0 367 999
- EP-A- 0 408 248
- EP-A- 1 074 381
- US-A- 5 622 734
- US-A- 5 913 765

## Description

### Field of the invention

The invention relates to a device and a method for applying a spot embossing pattern to a web of multi-ply tissue paper being processed in a paper converting machine.

### Technical background

There are different possible methods for applying an embossing pattern to tissue paper. The most common are point to point, nested, structural embossing or double embossing random laminate. In each of these cases, the embossing pattern is applied by use of one or more steel rolls in combination with rubber rolls. The rubber rolls have a yielding surface. A raised embossing pattern on the steel roll elastically presses into the rubber roll so that the tissue paper fed between the rubber roll and the steel roll is imparted an embossing pattern. All plies of a multi-ply tissue paper are thus embossed and are normally glued together. Alternatively, it is possible to provide a mechanical ply-bonding by edge-embossing both plies of tissue paper together.

In order to meet customer preferences, many multi-ply tissue paper products are provided with a background embossing pattern and a superimposed spot (motive) embossing pattern. The background pattern which will be denoted microembossing pattern in the following, normally consists of a regular structure of small protuberances in the tissue ply which is formed by small protrusions on an embossing roll which press against and into the tissue ply to be embossed. The spot embossing pattern, on the other hand, mainly consists of larger décor elements which are formed by a superposition over the microembossing pattern.

It is possible to provide embossing rolls in which both the microembossing pattern and the spot embossing pattern are engraved on the circumferential surface. However, if it is desired to change the spot embossing pattern, the whole embossing roll has to be exchanged resulting in rather long changeover times to exchange the rolls having a weight up to several tons. To exchange such an full size embossing roll, the changeover time can be in the range of several working days.

To overcome this problem, it has been proposed to use a separate spot embossing unit for imparting a graphic pattern to a tissue web already provided with a microembossing pattern. Such an additional unit consists of a spot roller having a graphic pattern on its circumferential surface and cooperating with a rubber roller. The additional spot roller has to be driven so that an additional driving unit and drive control are necessary.

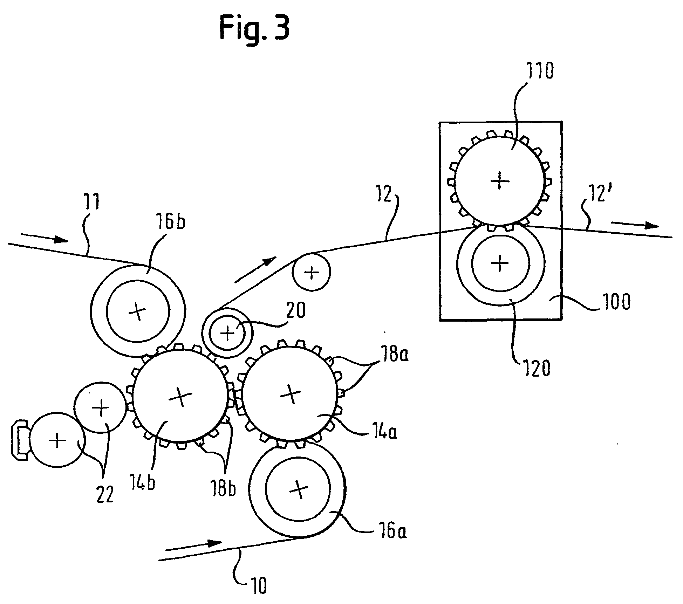

Fig. 3 shows a conventional device, as part of a paper converting machine, which has a separate spot embossing device 100 consisting of a steel engraved spot embossing roll 110 and a rubber anvil roll 120. The product 12 already ply-bonded together in a nested configuration passes through this spot embossing device 100 and leaves it as product 12' with an additional spot (motive) embossing.

The prior art device shown in Fig. 3 consists of two microembossing stations which impart a background embossing pattern to the two plies 10, 11 of tissue paper. Each microembossing unit consists of a steel roll 14a, 14b which cooperates with a rubber roll 16a, 16b. Between each steel embossing roll and the corresponding rubber roll, a nip is formed through which the plies of tissue paper pass. The steel embossing rolls 14a, 14b have protrusions 18a, 18b on their circumferential surface whose height, for an easy understanding of Fig. 3, is not drawn to scale but highly exaggerated. The protrusions 18a, 18b press into the yielding circumferential surface of the corresponding rubber roll 16a, 16b so that the ply of tissue paper running through the nip receives an embossing pattern with small protuberances.

In the example shown in Fig. 3, the two steel embossing rolls 14a, 14b are positioned relative to each other so that the two plies of tissue paper 10, 11 are brought together in a nested configuration. Additionally, the ply 11 of tissue paper receives an adhesive applied by use of the adhesive rolls 22 to that surface which comes into contact with the other ply 10 of tissue paper. After having brought together the two plies 10, 11 in a nested configuration, the combined two ply tissue product 12 passes through the nip between the steel embossing roll 14b and a marrying roll 20 in which the two plies are sufficiently pressed together so that the two plies are bonded together. Then, the product 12 leaves this part of the paper converting machine and is passed on to the aforementioned spot embossing device 100 which is operated as a separate unit of the paper converting machine.

EP 0 408 248 A2 discloses a device for applying a spot embossing pattern to a web of multi-ply tissue paper being processed in a paper converting machine. In the embodiment according to Fig. 1 of EP 0 408 248 A2, a first resilient roll cooperates either with a second resilient roll or a hard steel roll. If the steel roll has an embossing pattern, there is a first nip which adds embossing to the web to be processed. There is a second nip between the first resilient roll and a further embossing roll. A third nip is between the further embossing roll and a soft anvil roll. In this design, the spot embossing roll is not only positioned against the soft anvil roll but also against the first resilient roll which, in this case, acts as a marrying roll. However, the spot embossing unit according to EP 0 408 248 A2 is not easily accessible and easy to change.

EP 0 408 248 A2 represents the closest prior art.

### Summary of the invention

It is the object of the invention to provide a cost effective and variable device and a method for applying a spot embossing pattern to web of multi-ply tissue paper.

This object is solved by a device with the features of claim 1. The inventive method is characterized by the features of claim 10.

The invention resides in that the device for applying a spot embossing pattern to a web of multi-ply tissue paper comprises a marrying roll and a spot embossing unit directly cooperating with the marrying roll and being positioned against it. The spot embossing unit comprises a spot embossing roll with a raised embossing pattern on its circumferential surface. In other words, the spot embossing unit is incorporated in the ply bonding section of the paper converting machine but still provided as a separate unit so that it is easy accessible and easy to change. This provides a high flexibility to satisfy different customers who wish to be provided with different spot designs. Moreover, the rollers are relatively cheap and can be exchanged between different paper converting machines. Since the marrying roll acts as an anvil roll for the spot embossing roll of the spot embossing unit, it serves a double function. This reduces the number of components in the paper converting machine.

Preferred embodiments of the invention are described in the dependant claims.

According to a preferred embodiment of the invention, the spot embossing unit is rotating freely and driven by the rotation of the marrying roll. This measure further simplifies the device because it is not necessary to provide a driving unit and a control for the driving unit of the spot embossing device.

Preferably, the single plies of tissue paper are individually provided with a microembossing pattern applied by use of steel rollers with embossing protrusions cooperating with rubber anvil rollers. These steel rollers can be rotated in a way so that the microembossing protrusions are circumferrentially offset relative to each other. This provides a nested configuration of the combined tissue paper web.

According to a preferred embodiment of the invention, the spot embossing unit comprises one shaft which extends over the full width of the tissue web and carries a single spot embossing roll. In other words, one rotating shaft extending over the full width of the tissue web and having the same length as e.g. the marrying roll, carries an annular spot embossing roll in contact with the marrying roll. The advantage of this embodiment lies in the short changeover time for changing the spot embossing roll. In comparison to the alternative embodiments described below, the provision of one single embossing roll incurs higher costs.

According to an alternative embodiment of the invention, the spot embossing unit comprises a rotating shaft which extends over the full width of the tissue web and carries a plurality of spot embossing rolls. There is one single shaft onto which a plurality of individual spot embossing rolls are arranged. The individual spot embossing rolls can have the shape of short annular rings which are arranged in a longitudinal direction over the single rotating shaft and can be regrouped to realize a plurality of different spot embossing patterns on the tissue web. This embodiment of the spot embossing unit contributes to the high flexibility of the device which requires only short changeover times and, by use of low cost spot embossing rolls, can be specifically adapted to the customers' needs. Moreover, the provision of single spot embossing rolls enables a flexible adaption to desired production quantities. If a certain number of product webs are cut from the tissue web, two or more different design patterns can be produced at the same time. The inventive spot embossing unit enables a quick adjustment of the production output by changing the number of individual ring-like spot embossing roll which are used on one single rotating shaft.

Alternatively, the spot embossing unit comprises a plurality of individual spot embossing rolls each of which are carried by individual shafts. This alternative system even increases the flexibility of the spot embossing unit. If it is desired to change the distribution of design bands on the tissue paper web, it is no longer necessary to remove the individual spot embossing rolls from the full-length rotating shaft and to bead the desired spot embossing rolls again onto the shaft. A single spot embossing roll can easily be exchanged simple by removing and exchanging it.

In order to achieve the above discussed advantages of a high production flexibility, the width of the spot embossing rolls should correspond to the breadth of the product webs to be cut from the tissue web. This corresponds to the width of the finished product.

According to a preferred embodiment of the invention, the spot embossing unit is removably mounted to a machine frame of a paper converting machine. This further increases the flexibility of the spot embossing unit, because it can be easily shifted from one paper converting machine to another one.

According to a preferred embodiment of the inventive method, the plies of tissue web are adhesively bonded at the spot embossing protuberances. Then, the marrying roll should be slightly spaced from its cooperating steel embossing roll so that the microembossing pattern does not contribute to the adhesive ply bonding between the two plies. Only the spot design sufficiently presses the two plies together so that the adhesive ply bonding of the two tissue webs occurs only at the protuberances of the spot embossing pattern. However, it should be borne in mind that in this embodiment, the marrying roll can no longer be passively rotated by contact with the corresponding steel embossing roll. Instead, the marrying roll has to be driven.

### Brief description of the drawings

In the following, a preferred embodiment of the invention will be described with reference to accompanying drawings. In the drawings,
- Fig.1: is a schematic view of the inventive spot embossing unit and its position within a paper converting machine;
- Fig. 2a: schematically shows one example of a possible arrangement of a plurality of individual spot embossing rolls onto one single shaft;
- Fig. 2b: schematically shows an alternative embodiment with a plurality of rotating shafts for the individual spot embossing rolls; and
- Fig. 3: schematically shows the provision of an individual spot embossing unit in a prior art device.

### Detailed description of a preferred embodiments

In the following description, identical or similar elements will be designated throughout the Figs. with the same reference numerals.

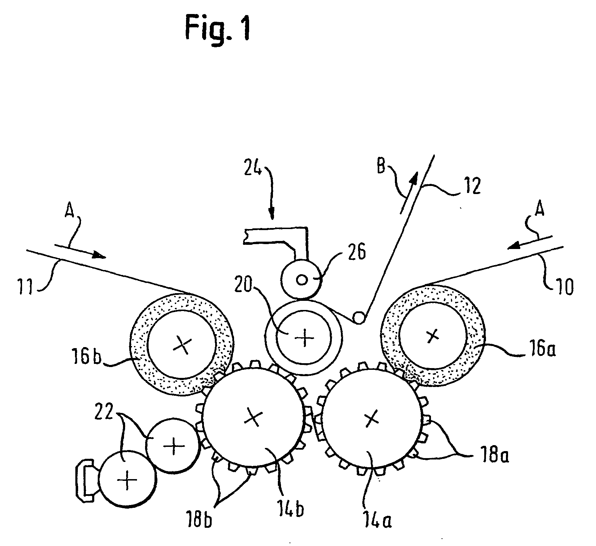

Fig. 1 schematically shows the position of a spot embossing unit within a paper converting machine. Although there are two plies of tissue paper in the example shown, it should be apparent to those skilled in the art that the multi-ply tissue paper to be processed in the inventive device might consist of more than two plies of tissue paper.

The two plies 10, 11 of tissue paper are fed in the direction of arrow A and pass through the nip between rubber rolls 16a, 16b and corresponding steel embossing rolls 14a, 14b. The steel embossing rolls 14a, 14b are driven and in registration with each other such that the microembossing protrusions 18a, 18b on their peripheral surface apply a microembossing pattern of small protuberances to the tissue webs 10, 11 such that these two plies can be brought together in a nested configuration. The rubber rollers 16a, 16b are rotated together with the steel embossing rollers because of their frictional contact with them.

The two plies of micro embossed tissue paper are combined together and pass through the nip between a marrying roll 20 and the steel embossing roll 14b. The tissue web 11 running around the steel embossing roll 14b is additionally provided with an adhesive layer on that surface which is supplied in the usually known manner by means of adhesive applying rolls 22. Before the two-ply tissue paper web leaves the part of the paper converting machine in the direction of arrow B, a spot embossing is applied by means of the schematically shown spot embossing unit 24. This spot embossing unit 24 is mounted to the machine frame of the paper converting machine and comprises a spot embossing roll 26 forming a nip with the marrying roll 20. The combined two ply tissue paper passes through the nip between the spot embossing roll 26 and the marrying roll 20.

As can be derived from the schematic drawing of Fig. 1, the spot embossing roll 26 has a considerably smaller diameter compared to the steel embossing rolls 14a and 14b. Moreover, the spot embossing unit 24 is directly attached to the machine frame. Therefore, it is possible to dismount the spot embossing unit 24 and to replace it by a different one or to shift it to another paper converting machine.

The spot embossing roll has spot protrusions (not depicted in Fig. 1) which provide a design pattern on the tissue web 12 in the nip between the spot embossing roll 26 and the marrying roll 20. Therefore, the spot embossing will become superposed the microembossing pattern.

The spot embossing roll can be provided as a single roll which extends over the whole length of the tissue web to be processed. In other words, according to this embodiment the spot embossing roll 26 has the same length as the marrying roll 20. The advantage of this embodiment lies in the easy exchangeability of the spot embossing roll so that it can easily be replaced by another spot embossing roll which shows another design.

Another possibility is to provide a spot embossing unit comprising a plurality of spot embossing rolls which are arranged relative to each other in the direction of their rotational axis, resulting in the possibility to change the individual spot embossing patterns guide easily. The individual rings 28a, 28b .... 28n can each have the same spot embossing pattern or different ones. The individual spot embossing rolls 28 are interposed in an freely selectable pattern between the edge rolls 30 arranged at the longitudinal sides of the spot embossing unit. The edge rolls 30 are positioned in that peripheral region of the tissue web which are trimmed along the longitudinal edges of the tissue web. The width a of the individual spot embossing rolls is chosen so that it corresponds to the breadth of the product webs to be cut from the tissue web. For example, in the case of toilette paper to be produced, the width of the individual spot embossing rolls corresponds to that of the toilette paper rolls. Therefore, the individual rolls can be provided with different design patterns which are specifically selected according to production requirements or the customers' requests.

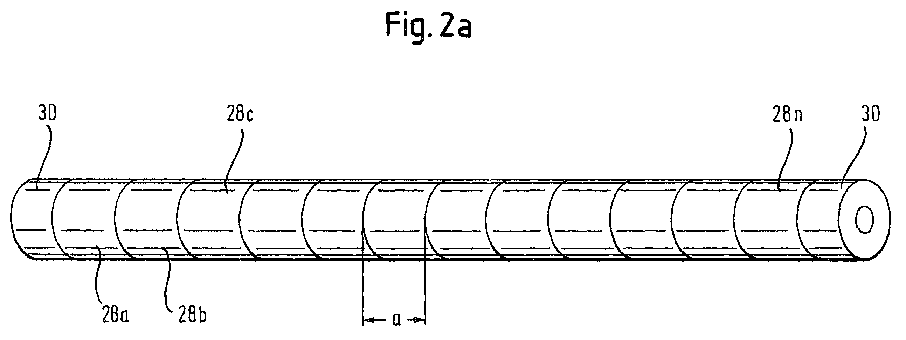

The schematically shown group of individual spot embossing rolls shown in Fig. 2a can be mounted onto one single rotating shaft. Preferably, the individual spot embossing rolls 28 are secured to the rotating shaft by means of a key connection so that they are fixed in a rotational direction of the shaft. In the same way, a movement of the individual rolls in a longitudinal direction of the shaft can be prevented by the provision of suitable abutment elements which are in contact with the edge rolls 30.

The advantage of the embodiment according to Fig. 2a lies in its high flexibility with regard to the grouping of the individual spot embossing rolls 28 on the rotating shaft of the spot embossing unit. Moreover, it is easily possible to transfer the spot embossing unit to another production line without having to handle the individual spot embossing rolls. However, a disadvantage lies in the need to dismount the whole assembly of spot embossing rolls if one specific roll somewhere in the middle of the shaft has to be changed.

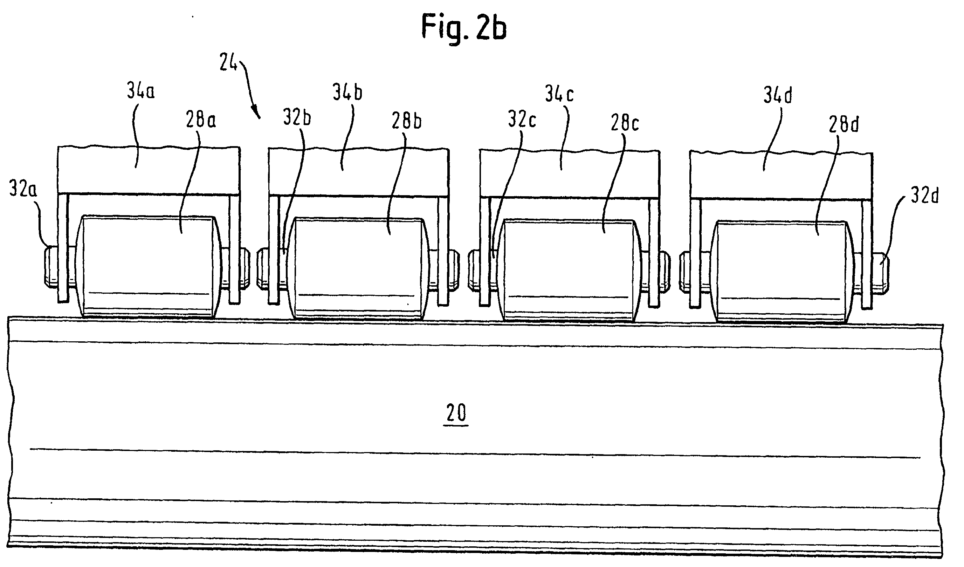

To avoid this disadvantage, it is also possible to use a spot embossing unit like that schematically shown in Fig. 2b. The spot embossing unit comprises individual spot embossing rolls 28a to 28d, only four of which are shown by way of example. Each of the spot embossing rolls 28a to 28d are provided on an individual rotating shaft 32a to 32d which is rotatably supported by individual brackets 34a to 34d of the spot embossing unit 24. The brackets can be individually urged in contact with the marrying roll 20. With the structure according to Fig. 2b it is possible to exchange individual spot embossing rolls without having to dismount the other spot embossing rolls. This reduces the changeover time for changes in the configuration of the spot embossing unit and further contributes to an increased flexibility of the inventive spot embossing unit.

The inventive constructions provides a high flexibility of the system. Contrary to the embodiment described in Fig. 1, it is also possible to provide a gap between the marrying roll 20 and the steel embossing roll 14b. In that case, the two plies of tissue paper are adhesively bonded only at the spot embossing unit. However, in that case, the marrying roll 20 is no longer driven by the frictional contact with the steel embossing roll 14b so that it has to be individually driven.

The inventive spot embossing unit provides a high flexibility so that different spot designs can be combined with different microembossing pattern, product types, product parameters and product specifications. Any change of the spot embossing unit can be performed in relative short changeover times so that any variations can be easily performed.

## Claims

1. Device for applying a spot embossing pattern to a web of multi-ply tissue paper (12) being processed in a paper converting machine, comprising:
- a marrying roll (20); and
- a spot embossing unit (24) cooperating with and being positioned against the marrying roll (20); wherein
- the spot embossing unit (24) comprises a spot embossing roll (26; 28) with a raised embossing pattern on its circumferential surface;
**characterized in that**
the marrying roll cooperates with a steel embossing roll (14b) .

2. Device according to claim 1,
**characterized in that**
the spot embossing unit (24) is freely rotating and is driven by frictional contact with the marrying roll (20).

3. Device according to claim 1 or 2, wherein the single plies (10, 11) of tissue paper are individually provided with a microembossing pattern applied by the use of steel rolls (14a, 14b) with embossing protrusions (18a, 18b) cooperating with rubber anvil rolls (16a, 16b).

4. Device according to claim 3, wherein the two plies of micro embossed tissue web (10, 11) are combined in a nested configuration.

5. Device according to any of the preceding claims,
**characterized in that**
the spot embossing unit (24) comprises one shaft which extends over the full width of the tissue web and carries a single spot embossing roll.

6. Device according to one of the claims 1 to 4,
**characterized in that**
the spot embossing unit (24) comprises a rotating shaft which extends over the full width of the tissue web and carries a plurality of spot embossing rolls (28a, 28b ... 28n).

7. Device according to one of the claims 1 to 4,
**characterized in that**
the spot embossing unit (24) comprises a plurality of individual spot embossing rolls (28a, 28b, 28c, 28d) which are carried by individual shafts (32a, 32b, 32c, 32d).

8. Device according to claim 6 or 7,
**characterized in that**
the width (a) of the spot embossing rolls (28) corresponds to the breadth of the product webs to be cut from the tissue web (12).

9. Device according to one of the preceding claims,
**characterized in that**
the spot embossing unit (24) is removably mounted to a machine frame of the paper converting machine.

10. Method for applying a spot embossing pattern to a web of multi-ply tissue, comprising the steps:
- combining at least two plies of tissue web by means of a marrying roll cooperating with a steel embossing roll;
- passing the combined tissue web between the marrying roll and the spot embossing unit cooperating with the marrying roll; and
- spot embossing the combined tissue web, wherein the spot embossing unit has at least one spot embossing roll with the raised spot embossing pattern on its circumferential surface.

11. Method according to claim 10, wherein the at least one spot embossing roll is rotating freely and is driven by the rotation of the marrying roll.

12. Method according to claim 10 or 11, further comprising step:
- providing at least one ply of tissue with a microembossing pattern before combining the at least two plies of tissue paper.

13. Method according to claim 12,
**characterized in that**
the two plies of tissue paper are provided with a microembossing pattern and are combined in a nested configuration.

14. Method according to any of the claims 10 to 13, further comprising the step:
- adhesively bonding the plies of tissue web at the spot embossing protuberances.

## Patentansprüche

1. Vorrichtung zum Aufbringen eines Spot-Embossing-Musters (punktuellen Prägemusters) auf eine Bahn eines mehrlagigen Tissuepapiers (12), das in einer Papierverarbeitungsmaschine (Converting-Maschine) verarbeitet wird, umfassend:
- eine Marrying-Roll (Verheiratungswalze) (20); und
- eine Spot-Embossing-Einheit (24), die mit der Marrying-Roll (20) zusammenwirkt und gegen diese positioniert ist; wobei
- die Spot-Embossing-Einheit (24) eine Spot-Embossing-Walze (26; 28) mit einem erhabenen Prägemuster auf ihrer Umfangsfläche umfasst;
**dadurch gekennzeichnet, dass**
die Marrying-Roll mit einer Stahlprägewalze (14b) zusammenwirkt.

2. Vorrichtung nach Anspruch 1,
**dadurch gekennzeichnet, dass**
sich die Spot-Embossing-Einheit (24) frei dreht und durch Reibungskontakt mit der Marrying-Roll (20) angetrieben wird.

3. Vorrichtung nach Anspruch 1 oder 2, bei der die einzelnen Lagen (10, 11) des Tissuepapiers einzeln mit einem Mikro-Embossing-Muster versehen werden, das durch Verwendung der Stahlwalzen (14a, 14b) mit den Prägevorsprüngen (18a, 18b), die mit Gummigegenwalzen (16a, 16b) zusammenwirken, aufgebracht wird.

4. Vorrichtung nach Anspruch 3, bei der die zwei Lagen aus mit einer Mikroprägung versehenen Tissuebahn (10, 11) in nested Anordnung verbunden werden.

5. Vorrichtung nach einem der vorstehenden Ansprüche,
**dadurch gekennzeichnet, dass**
die Spot-Embossing-Einheit (24) eine Achse umfasst, die sich über die gesamte Breite der Tissuebahn erstreckt und eine einzelne Spot-Embossing-Walze trägt.

6. Vorrichtung nach einem der Ansprüche 1 bis 4,
**dadurch gekennzeichnet, dass**
die Spot-Embossing-Einheit (24) eine sich drehende Achse umfasst, die sich über die gesamte Breite der Tissuebahn erstreckt und mehrere Spot-Embossing-Walzen (28a, 28b ...28n) trägt.

7. Vorrichtung nach einem der Ansprüche 1 bis 4,
**dadurch gekennzeichnet, dass**
die Spot-Embossing-Einheit (24) mehrere einzelne Spot-Embossing-Walzen (28a, 28b, 28c, 28d) umfasst, die von einzelnen Achsen (32a, 32b, 32c, 32d) getragen sind.

8. Vorrichtung nach Anspruch 6 oder 7,
**dadurch gekennzeichnet, dass**
die Breite (a) der Spot-Embossing-Walzen (28) der Breite der Produktbahnen, die aus der Tissuebahn (12) zu schneiden sind, entspricht.

9. Vorrichtung nach einem der vorstehenden Ansprüche,
**dadurch gekennzeichnet, dass**
die Spot-Embossing-Einheit entfernbar an einem Maschinenrahmen der Papierverarbeitungsmaschine angebracht ist.

10. Verfahren zum Aufbringen eines Spot-Embossing-Musters auf eine Bahn eines mehrlagigen Tissues, umfassend die Schritte:
- Verbinden wenigstens zweier Lagen einer Tissuebahn mittels einer Marrying-Roll, die mit einer Stahlprägewalze zusammenwirkt;
- Durchführen der verbundenen Tissuebahn zwischen der Marrying-Roll und der Spot-Embossing-Einheit, die mit der Marrying-Roll zusammenwirkt; und
- Spot-Embossing der verbundenen Tissuebahn, wobei die Spot-Embossing-Einheit wenigstens eine Spot-Embossing-Walze mit dem erhabenen Spot-Embossing-Muster auf ihrer Umfangsfläche aufweist.

11. Verfahren nach Anspruch 10, bei dem sich wenigstens eine Spot-Embossing-Walze frei dreht und durch die Rotation der Marrying-Roll angetrieben wird.

12. Verfahren nach Anspruch 10 oder 11, ferner umfassend den Schritt:
- Bereitstellen wenigstens einer Tissuelage mit einem Mikroprägemuster vor dem Verbinden der wenigstens zwei Lagen aus Tissuepapier.

13. Verfahren nach Anspruch 12,
**dadurch gekennzeichnet, dass**
die zwei Lagen aus Tissuepapier mit einem Mikroprägemuster versehen sind und in nested Anordnung verbunden werden.

14. Verfahren nach einem der Ansprüche 10 bis 13, ferner umfassend den Schritt:
- Klebendes Verbinden der Lagen aus Tissuebahn an den Spot-Embossing-Vorsprüngen.

## Revendications

1. Dispositif permettant d'appliquer un motif de gaufrage par points à une bande de papier sanitaire ou domestique multicouche (12) en cours de traitement dans une machine de transformation du papier, comprenant :
- un rouleau d'application (20) ; et
- une unité de gaufrage par points (24) coopérant avec et positionnée contre le rouleau d'application (20) ; dans lequel
- l'unité de gaufrage par points (24) comprend un rouleau de gaufrage par points (26 ; 28) ayant un motif de gaufrage en relief sur sa surface périphérique ;
**caractérisé en ce que** le rouleau d'application coopère avec un rouleau de gaufrage en acier (14b).

2. Dispositif selon la revendication 1, **caractérisé en ce que** l'unité de gaufrage par points (24) tourne librement et est entraînée par contact frictionnel avec le rouleau d'application (20).

3. Dispositif selon la revendication 1 ou 2, dans lequel les différentes couches (10, 11) de papier sanitaire ou domestique sont pourvues individuellement d'un motif de microgaufrage appliqué à l'aide de rouleaux en acier (14a, 14b) munis de saillies de gaufrage (18a, 18b) coopérant avec des contre-cylindres en caoutchouc (16a, 16b).

4. Dispositif selon la revendication 3, dans lequel les deux couches de bande de papier à microgaufrage (10, 11) sont associées en une configuration emboîtée.

5. Dispositif selon l'une quelconque des revendications précédentes, **caractérisé en ce que** l'unité de gaufrage par points (24) comprend un axe qui s'étend sur toute la largeur de la bande de papier et qui supporte un seul rouleau de gaufrage par points.

6. Dispositif selon l'une quelconque des revendications 1 à 4, **caractérisé en ce que** l'unité de gaufrage par points (24) comprend un axe rotatif qui s'étend sur toute la largeur de la bande de papier et qui supporte plusieurs rouleaux de gaufrage par points (28a, 28b... 28n).

7. Dispositif selon l'une quelconque des revendications 1 à 4, **caractérisé en ce que** l'unité de gaufrage par points (24) comprend plusieurs rouleaux de gaufrage par points individuels (28a, 28b, 28c, 28d) qui sont supportés par des axes individuels (32a, 32b, 32c, 32d).

8. Dispositif selon la revendication 6 ou 7, **caractérisé en ce que** la largeur (a) des rouleaux de gaufrage par points (28) correspond à la largeur des bandes de produit à couper dans la bande de papier (12).

9. Dispositif selon l'une des revendications précédentes, **caractérisé en ce que** l'unité de gaufrage par points (24) est montée de manière amovible sur un châssis de machine de la machine de transformation du papier.

10. Procédé d'application d'un motif de gaufrage par points à une bande de papier sanitaire ou domestique multicouche, comprenant les étapes consistant à :
- associer au moins deux couches de papier sanitaire ou domestique au moyen d'un rouleau d'application qui coopère avec un rouleau de gaufrage en acier ;
- faire passer la bande de papier combinée entre le rouleau d'application et l'unité de gaufrage par points qui coopère avec le rouleau d'application ; et
- gaufrer par points la bande de papier combinée, l'unité de gaufrage par points comportant au moins un rouleau de gaufrage par points muni du motif de gaufrage par points en relief sur sa surface périphérique.

11. Procédé selon la revendication 10, dans lequel ledit au moins un rouleau de gaufrage par points tourne librement et est entraîné par la rotation du rouleau d'application.

12. Procédé selon la revendication 10 ou 11, comprenant en outre l'étape consistant à former un motif de microgaufrage sur au moins une couche de papier avant d'associer lesdites au moins deux couches de papier sanitaire ou domestique.

13. Procédé selon la revendication 12, **caractérisé en ce que** les deux couches de papier sanitaire ou domestique sont pourvues d'un motif de microgaufrage et sont associées en une configuration emboîtée.

14. Procédé selon l'une quelconque des revendications 10 à 13, comprenant en outre l'étape consistant à lier de manière adhésive les couches de papier sanitaire ou domestique au niveau des protubérances de gaufrage par points.
